Europäisches Patentamt

(19) European Patent Office

Office européen des brevets

(11) Publication number: **0 158 851**
**A2**

(12) **EUROPEAN PATENT APPLICATION**

(21) Application number: 85103262.3

(22) Date of filing: 20.03.85

(51) Int. Cl.⁴: **B 01 D 3/22**

(30) Priority: 21.03.84 SE 8401564

(43) Date of publication of application:
23.10.85 Bulletin 85/43

(84) Designated Contracting States:
BE DE FR GB NL

(71) Applicant: MoDo-Chemetics Aktiebolag
Box 313
S-891 01 Örnsköldsvik(SE)

(72) Inventor: Candolin, Carl-Johan
Slottsgatan 9 B
SF-20100 ABO(FI)

(74) Representative: Barz, Peter, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) Cross-flow diffusion column.

(57) There is provided a cross-flow diffusion column possessing improved properties for maritime use and for use at high gas velocities, this column comprising novel trays of the shelf type. The trays are provided with perforations for a downwardly flowing liquid phase and at least one opening for an upwardly flowing gas phase. Arranged on the upper surfaces of respective trays is a lattice structure comprising vertically mounted sheet-like parts, these lattice structures totally eliminating the negative effect which movement of the column might otherwise induce, primarily with respect to the efficiency of the column.

Fig. 1

1

0158851

Cross-flow diffusion column

## Technical field

The present invention relates to a cross-flow diffusion column possessing improved properties in marine use and at high gas velocities. By diffusion column is meant those columns in which diffusion processes take place, i.e. processes in which an exchange of material takes place between a liquid phase and a gas phase (which includes vapour) by diffusion - or in certain cases by chemical reaction, at the interfaces or boundary layers between the two phases. Examples of such processes include gas absorption, stripping of gaseous components, the washing and moistening of gases, and the drying or cooling of gases with the aid of contact substances in liquid phase. In all of these diffusion processes the aim is to effect an exchange of material as completely as possible. Consequently, it is endeavoured to maximise the contact surfaces between the phases in a given column and to generate turbulent conditions in the boundary layers. By high gas velocities is normally meant gas velocities in excess of 1 m/s, when the gas phase comprises air at normal pressure.

## Background art

In practice, various methods have been applied in known diffusion columns in an attempt to obtain the largest possible contact surface or area between the phases. For example, in one certain type of column, so-called spray towers, a finely divided liquid phase is caused to fall in the form of small droplets down through the gas phase. In the case of columns equipped with bubble-cap trays, valve-trays, and sieve-trays, however, the gas phase rises in the form of small bubbles, up through the liquid phase instead. In other known embodiments, the liquid phase in the form of a film of liquid is caused to contact the gas or vapour phase in concurrent flow, counter-current or cross-flow on, for example, so-called shelf trays, or other contact surfaces on which thin liquid films are able to form.

The aforedescribed contact trays or supports are normally mounted in a cylindric shell, to provide a column which must be positioned precisely vertically, since even slight deviations from the vertical position will impair the exchange of material between the phases, i.e. the efficiency of the column. This is true of all columns in which there is horizontally mounted trays of any of the aforesaid types, although to a lesser degree in respect of columns filled with packing bodies and spray towers, since the latter columns do not have actual trays. Apart from the latter, columns equipped with bubble-cap trays, valve trays and sieve trays are characterised in that the liquid phase runs over the surface of the substantially horizontally installed trays while the gas phase bubbles through the liquid phase layers. Should the column lean or be swung out of the vertical, the liquid phase layers will flow in the direction of tilt, whereupon those parts of the trays located in the opposite direction become devoid of liquid and therewith ineffective.

In order to be able to carry out a diffusion process with an acceptable degree of efficiency in a column which for different reasons deviates from the vertical, it has been found that the column must be greatly overdimensioned. This is achieved primarily by increasing the number of trays by 20-50%, therewith increasing the height of the column as a whole. The use of a taller column, however, adds to the cost of the structure and also results in a higher pressure-drop in the column, which leads to an increase in the amount of energy required to drive the fans and in capital costs. In addition, the static height in respect of the liquid phase becomes greater, which in turn leads to an increase in energy consumption and higher capital costs. The increase in the liquid content of the column also increases the total wieght thereof, the amount of space required thereby, and the storage costs. Another disadvantage of equal importance is that the aforesaid weight increase results in a much higher moment of inertia for the column.

0158851

In certain known diffusion columns provided with shelf trays of different designs, the pressure-drop has been successfully reduced by conducting the gas phase in a zig-zag course through the column. Success has also been achieved in increasing the turbulence in both the liquid and the gas phase, by mounting turbulence-generating devices on the trays. However, these columns and other known columns, and also those earlier described, are sensitive to movement and their efficiency is negatively affected as soon as they deviate from the vertical.

In European Patent Publication EP-A1-21594 there is described a distillation tray which is said to be suitable for use with distillation columns placed on barges and like moveable carriers. The described tray is provided with a plurality of closely packed square cup-like units whose bottom walls are perforated so that the gas phase can pass upwardly therethrough, while the side-walls of the "cups" act as dams to restrain a certain amount of the liquid phase. So that surplus liquid phase is able to run down onto the trays located beneath the "cups" present, the upper parts of respective side-walls are slotted. Liquid phase passes through these slots and is collected and conducted down in underlying "cups" through a special system of pipes. The exit orifices of the pipes lie beneath the surface of the liquid in the underlying "cups", thereby to form a liquid lock or trap in each "cup", which prevents the gas phase from passing freely through a distillation tray. Thus, in the described column the process follows the counter-flow principle, i.e. the gas phase bubbles up through the liquid phase present in each "cup", therewith affording a relatively good efficiency.

It is also stated in this publication that sufficient liquid phase can be retained in each "cup" to produce a liquid lock for the gas phase, even when the trays are tilted by movement of the column carrier or support.

The distillation tray described in this EP-Publication, however, is encumbered with various disadvantages, of which the particularly complicated design of the tray is the most obvious, resulting in high manufacturing costs and heavy weight.

4

0158851

Furthermore, the task of servicing a column filled with trays or plates of the aforesdescribed kind is thought to be higly complicated and expensive.

## Disclosure of the Invention

### Technical Problem

The need to be able to carry out diffusion processes in columns erected on board ships and on floating platforms or platforms which stand on the sea bed is becoming more and more topical, due largely to the progressive world-wide increase in offshore activities. In these contexts, movement of the carrier or support and its deviation from the horizontal are often significant and create serious problems, inter alia in achieving an acceptable degree of efficiency when using known diffusion columns. One way of improving the efficiency, however, is to make the column taller, although this results in a considerably higher moment of inertia of the column. This is a serious disadvantage in the present context, because an increase in weight at a high location requires a multiple increase in the counter-weight at a low location on the carrying support, in order to compensate the increase in the moment of inertia. Additionally there is added a secondary increase in the buoyancy of the support in order to maintain the same unchanged. This results in a five-fold to ten-fold increase in the weight of the entire structure for the purpose of compensating the increased weight of the column. This leads to a radical increase in investment costs, to which can be added the higher operational costs associated with a taller column.

Another problem associated with such diffusion columns is one of constructing the columns so that a higher degree of efficiency is obtained at high gas velocities, without the weight of the columns becoming excessive and the construction thereof over-complicated.

5

**0158851**

The aforementioned problems are solved with the aid of the present invention, which relates to a cross-flow diffusion column with improved properties in maritime use and in the employment of high velocities in respect of the gas phase. The diffusion column in question is characterized by the combination that it is provided with a given number of trays of the shelf kind, each of which comprises a planar plate provided with perforations for a downwardly running liquid phase and at least one opening for an upwardly flowing gas phase; in that said trays extend substantially from one side of the column to the other and are so dimensioned and located that the gas-throughflow opening is located alternately on one and the other side of the column and, or alternatively with more openings per tray said openings are displaced laterally and located substantially centrally between the openings in the nearest overlying tray, such that during its passage up through the column the gas will travel along one or more zig-zag paths, a part of which extends parallel with the trays and in cross-flow with the liquid phase running through the perforations in said trays towards the base of the column; and in that the perforated trays have mounted on the upper surfaces thereof a lattice structure comprising vertically arranged sheet-like parts which together with the plates of said trays form compartments for damming the liquid phase and preventing such lateral movement thereof of said liquid phase as might occur when the column is tilted sideways.

It has been found particularly suitable for the height of the vertical sheet-like parts on the upper surfaces of the trays to be 0.05-0.5, preferably 0.2 times the perpendicular distance between the plates of said trays. The compartments or pockets formed by the vertically extending sheet-like parts are suitably of square, extended rectangular or triangular shape.

In order to enable the trays to be mounted in a correct position with respect to optimal functioning of the column, it has been found suitable to provide the trays with support and spacing means, such means being intended to assist in supporting the trays and in maintaining said trays at a given distance apart vertically. The number and design of these support and spacing means is dependent on the diameter of the column from case to case.

For example, when the diameter of the column is 300 mm or therebeneath it has been found suitable to combine the support and spacing means in a centrally arranged spacer bar which holds the trays at a desired distance therebetween and supports the weight of overlying trays and the liquid phase collected thereon. The aforesaid spacer bar is supported at the bottom thereof on a carrier beam arranged diagonally in the proximity of the lowest section of the column. One such diagonal carrier beam is used in all columns according to the invention, irrespective of the size of the column.

When the diameter of the column exceeds 300 mm, the aforesaid support and spacing means are arranged at a number of locations between the trays, for the purpose of fixing the position thereof.

According to one preferred embodiment of the invention, 2-20 trays are assembled together and secured in a thin, cylindrical shell to form modules which upon assembly can be readily lowered into the column shell in a simple fashion and stacked one upon the other.

The upper and lower peripheral edges of each module is also suitably provided with a supporting and sealing flange intended to receive a metal thread or wire which seals against the shell of the column. The support and sealing flanges also reinforce the upper and lower end parts of the thin, cylindrical wall encircling each module, therewith to impart to the module desirable additional stability.

In the case of modules adapted for columns having a diameter of 1.0 m or less, the necessary support means preferably comprises a centrally arranged bar or rod (tension rod) which is provided with a screw thread at both ends thereof and the length of which is equal to the total height of the modules. Placed around the bar are tubular spacers provided with support plates, for distributing the pressure. The modules are compressed and stiffened with the aid of nuts screwed onto respective ends of the tension rod, wherewith all the trays in the modules are fixed in their correct positions at the same time by the tubular spacers mounted concentrically on the rod and attached by welding into the thin cylindrical wall encircling the module.

In addition to the centrally arranged supporting and spacing means, modules adapted for columns of diameters greater than 1 m are suitably proveded with further support and spacing means arranged at a plurality of locations between the trays incorporated in the modules, so as to secure the position of said modules and to increase their stability.


Advantages

Because of their low height and low weight, cross-stream diffusion columns according to the invention are particularly suited for use in lake- or sea-based plants. The design of the trays incorporated in the columns contributes decisively towards rendering the columns suitable for installation on movable support or carrier decks, such as ships and floating platforms, since it has been found that the lattice structure mounted on the trays is able to eliminate fully any negative tendencies which movements of the columns might otherwise induce, particularly with regards to the efficiency of the columns.

Another important advantage afforded by the lattice structures on respective trays is that they mechanically reinforce and stabilize the trays, thereby enabling the plate-thickness of the tray plates to be reduced by about 75%, in comparison with the thickness of plates used in conventional trays. Consequently, when seen totally, the present tray structure is lighter in weight than a conventional tray which has no lattice structure, thereby contributing in keeping down the overall weight of the present diffusion column.

In addition, the tray design of the present invention affords a wider choice with respect to the form of the perforations used, enabling the use of smaller hole sizes so that when compared with conventional designs a greater number of individual streams of liquid is obtained and so that the individual streams are finer than the streams produced with said conventional designs, therewith increasing the contact  area between the phases and improving efficiency.

A secondary, although nevertheless important effect obtained with the lattice structure according to the invention is that greater turbulence is obtained in both the gas and the liquid phase layers, resulting in greater efficiency. Those areas of the lattice structure not covered by the liquid phase but wetted as a result of splashing function as additional contact surfaces between gas and liquid.

The construction according to the invention is also highly efficient at high gas velocities.

According to one preferred embodiment of the invention a plurality of trays are combined to form readily handled modules, which can be readily lowered in a simple fashion into the column shell and stacked one upon the other. This affords obvious advantages. Particular mention is made, however, to the fact that when using such a module design maintenance can be carried out much more easily than would otherwise be the case. A module which is defective or functions poorly can be quickly replaced with another and the defective module repaired at leisure in the relative quiet of a suitable workshop. Thus, maintenance and repair work need not be carried out in the column itself, and stoppages resulting from such breakdowns are of shorter duration.

Brief Description of the Drawings

Figure 1 is a cross-sectional view of a diffusion column according to the invention. Figure 2 and Figure 3 are sectional views illustrating trays from the column of Figure 1, seen from above, Figure 2 being taken on the line A-A in Figure 1 and Figure 3 on the line B-B in said Figure. Figure 4 is a detailed cross-sectional view of two trays from the column shown in Figure 1 (the section being taken on the line C-C in Figure 2).

Figure 5 is a cross-sectional view of a diffusion column containing trays combined to form modules, and Figure 6 illustrates in detail the manner in which the seal between two of the modules and the column shell is suitably effected.

Figure 7 is a cross-sectional view of a module according to the invention comprising four trays and Figure 8 illustrates in detail the design of support and spacing means in connection with one of the trays of said module.

Finally, Figure 9 is a cross-sectional view of a column detail having three trays. In this case the trays are provided with several openings for upward passage of the gas phase.

## Preferred Embodiment of the Invention

Columns and details thereof illustrated in the Figures constitute preferred embodiments of the invention. So that the invention will be more readily understood, it will now be described in more detail with reference to the Figures.

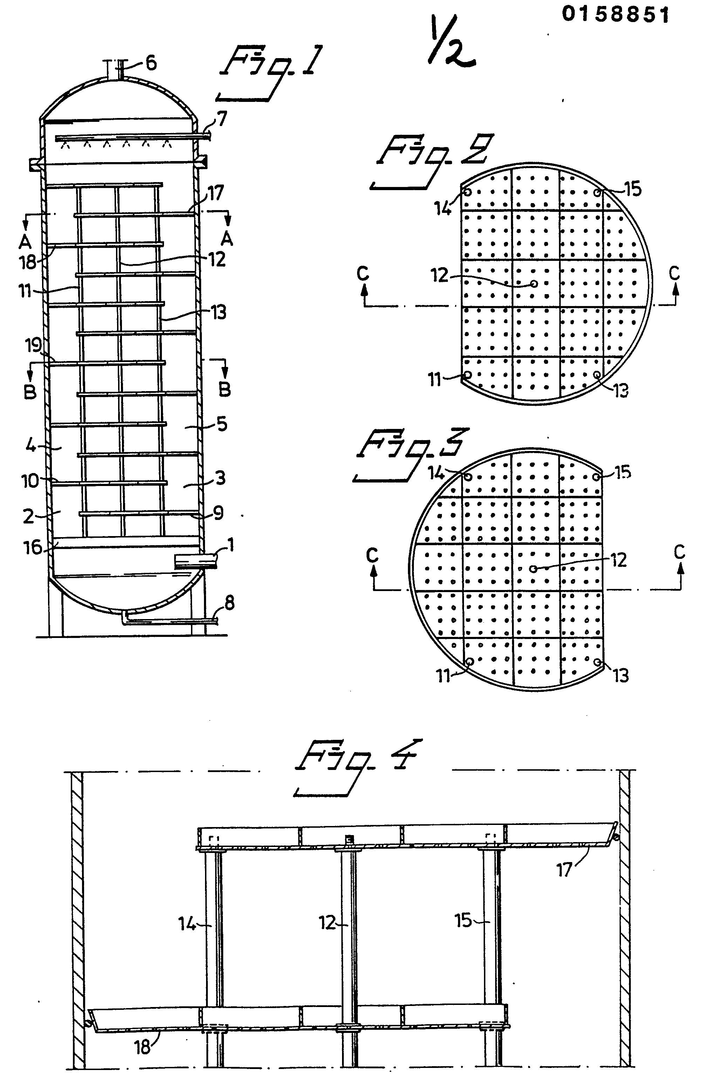

With the diffusion column illustrated in Figure 1, this column comprising 12 shelf-like trays with lattice structures mounted thereon, the gas phase is introduced through the pipe 1 and then passes through the opening 2 and up through the column, in a zig-zag path. During its upward passage through the column, the gas phase will thus pass through the openings 3,4,5 and so on until it reaches the top of the column, where it is discharged through the pipe 6. The liquid phase on the other hand is introduced at the top of the column, through the distribution pipe 7, and then runs down through the perforated trays provided with said lattice structures, and is finaly taken out through the pipe 8.

During its passage from, for example, the opening 2 to the opening 3, the gas phase flows horizontally and, at the same time, parallel with the tray 9. Thus, the gas phase will pass the liquid phase streaming down from the tray 10 in cross-flow with said liquid phase. The flow conditions of the phases are similar throughout the whole of the column.

and hence to one skilled in this art the column is known as a "cross-flow" diffusion column.

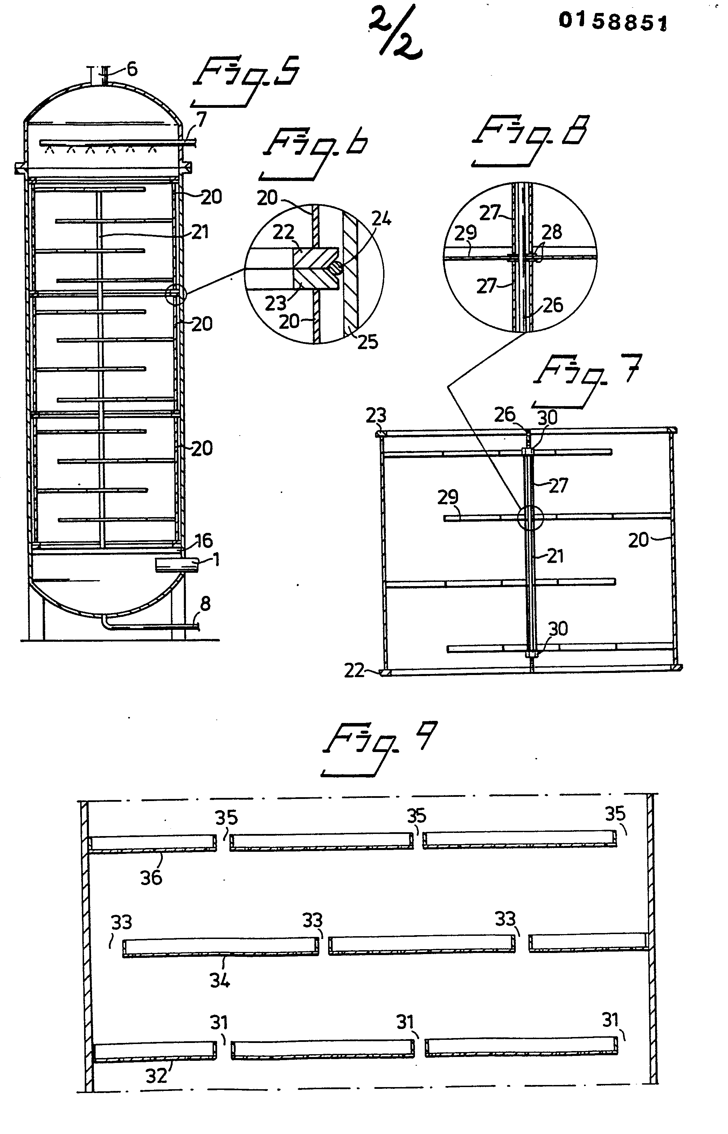

The column has arranged therein support and spacing means whose purpose is to support the trays and to secure them in their correct positions. The column of the illustrated embodiment incorporates five such means, although only three, 11, 12 and 13, can be seen in Figure 1. The position of the remaining two support and spacing means, 14 and 15, can be seen from Figures 2 and 3. The support and spacing means are supported at their lower ends on the support beam 16.

Figure 2 illustrates the tray 17 and Figure 3 the tray 19 of the column illustrated in Figure 1, seen from above. These two Figures also illustrate the design of the lattice structure and the positioning of the perforations in the trays 17 and 19. The Figures also illustrate the openings for passage of the gas phase, and it will be noted that the opening in the tray 17 (Figure 2) is located furthest to the left, while the opening in the tray 19 (Figure 3) is placed furthest to the right. This alternate positioning of the openings to the left and to the right of respective trays compels the gas phase to follow a zig-zag path. The sheet-like parts extending vertically from the trays and forming said lattice structure create a given, desirable turbulence in the gas-phase flow as it sweeps horizontally over the trays.

The design of the lattice structure is shown more clearly in Figure 4, which is an enlarged cross-sectional view of the trays 17 and 18 forming part of the column illustrated in Figure 1. Figure 4 also shows the positioning of the support and spacing means (12, 14 and 15) in more detail.

Figure 5 is a cross-sectional view of a diffusion column similar to that illustrated in Figure 1. The sole difference between these two columns is that the trays of the Figure 5 embodiment have been placed in the form of three modules, each comprising four shelf-like trays provided with upstanding lattice structures. As will be seen from the figure, each module is enclosed a thin, cylindrical wall 20, to which the peripheral edges of the individual trays are attached.

0158851

As a result hereof, the illustrated embodiment requires only one centrally arranged support and spacing means 21 for supporting the trays and securing the positions thereof.

With regard to the passages followed by the gas and liquid phases during their movement through the column illustrated in Figure 5, reference is made to the above description of the column illustrated in Figure 1, since the two columns are completely identical in this respect.

The cross-sectional view given in Figure 6 illustrates in detail the position of the support and sealing flanges 22 and 23 subsequent to two modules being stacked one upon the other within the column shell 25. Thus, the support and sealing flange 22 attached to the lower peripheral edge of the cylindrical wall 20 of the upper module lies tightly pressed against the corresponding flange 23 attached to the upper wall edge of the lower module. In order to prevent the gas phase from passing upwardly between the column shell 25 and the cylindrical          walls 20 of the modules, a seal in the form of a metal wire 24 is placed in grooves provided in the support and sealing flanges.

Figure 7 is a cross-sectional view of a free-standing module comprising four shelf-like trays provided with lattice structures. The Figure also illustrates the support and sealing flanges 22 and 23 attached to the lower and upper regions respectively of the cylindrical wall 20. Arranged in the centre of the module is a upport and spacing means 21 comprising a rod (tension rod) 26, which is provided at both ends thereof with a screw-thread and which has tubular spacing means 27 placed around said rod. The rod 26 serves to tension and rigidify the module, among other things to facilitate handling of the same. This clamping of the trays incorporated in the module is effected with the aid of nuts 30 screwed onto both ends of the rod 26. The connection of the spacing means 27 with one of the trays 29 is illustrated in detail in Figure 8, from which it can be seen that the pressure at which the tubular spacing means 27 about the tray 29 is distributed with the aid of support plates or washers 28 located on both sides of the tray. It will also be seen from the Figure that the rod (tension rod) 26 passes through the tray 29. The total length of the rod is thus equal to the height of the module.

Figure 9 illustrates suitable locations for the openings in those cases where the trays of a column according to the invention are provided with more than one opening for upward passage of the gas phase through the column. As illustrated in the Figure, the openings 31 in the tray 32 are displaced laterally and located substantially centrally between the openings 33 in the immediately overlying tray 34. The same is also true of the openings 33 in the tray 34 in relation to the openings 35 in the overlying tray 36. As a result of this positioning of the openings, the gas phase is forced to follow several zig-zag paths during its passage upwards through the column, which has been found to produce optimal column efficiency.

Diffusion columns according to the present invention have also been found to function splendidly when based on land, i.e. when erected on immovable support surfaces. Consequently, such columns can be advantageously used in the majority of industrial plants. This is particularly true when working with high gas-phase velocities, for which conventional columns are often less suited.

CLAIMS

1.    A cross-flow diffusion column possessing improved
properties in marine use and at high gas velocities,
c h a r a c t e r i z e d  by the combination that it is
provided with shelf-like trays, each comprising a planar
plate with perforations for a downwardly running liquid
phase and at least one opening for an upwardly flowing gas
phase; in that said trays extend substantially from one
side of the column to the other and are so dimensioned and
located that the gas-through flow openings are located
alternately on one and the other side of the column and
alternatively with more openings per tray said openings
are displaced laterally and substantially centrally between
the openings in the nearest overlying tray, such that
during its passage up through the column the gas phase will
travel along one or more zig-zag paths of which a part
extends parallel with the trays and in cross-flow with the
liquid phase running through the perforations in said trays,
towards the base of the column; and in that the perforated
trays have mounted on the upper surfaces thereof a lattice
structure comprising vertically arranged sheet-like parts
which together with the plates of said trays form compartments for damming the liquid phase and preventing such
lateral movement of the liquid phase as might occur should
the column be tilted sideways.

2.    A column according to claim 1, c h a r a c t e r i z e d
in that the vertically arranged sheet-like parts have a
height of 0.05-0.5, preferably 0.2 times the distance between
the plates of said trays.

3.    A column according to claims 1-2, c h a r a c t e r i z e d
in that the compartments formed have a square, elongated rectangular or triangular shape.

4.     A column according to claims 1-3, c h a r a c t e r i z e (
in that it is provided with support and spacing means for securing
the position of the trays.

5.     A column according to claim 4, c h a r a c t e r i z e d
in that in the case of column diameters < 300 mm the support means
comprises a centrally arranged spacing rod arranged to maintain
the trays at a given distance apart and to take-up the weight of
overlying trays together with the liquid phase collected thereon.

6.     A column according to claim 4, c h a r a c t e r i z e d
in that in the case of column diameters > 300 mm, the support and
spacing means are located at several positions between the trays,
for the purpose of securing the positions thereof.

7.     A column according to claims 1-3, c h a r a c t e r i z e (
in that 2-20 trays are assembled together and secured in a
cylindrical wall, to form modules which, upon assembly, can be
lowered down into the column shell and stacked one upon the
other.

8.     A column according to claim 7, c h a r a c t e r i z e d
in that the upper and lower peripheral edges of each module
are provided with a supporting and sealing flange arranged to
receive a metal wire or metal rod which seals against the
column shell.

9.     A column according to claim 7 and claim 8,
c h a r a c t e r i z e d  in that in the case of column dia-
meters < 1 m the support means of each module comprises a
centrally arranged rod (tension rod) having screw-threads
at both ends thereof, the length of which rod is equal to
the total height of the module and said rod having fitted
therearound tubular spacing means provided with support
plates or washers at each end thereof, wherewith the module is compressed and rigidified with the aid of nuts threaded on the ends of said rod at the same time as the trays of said module are fixed in their correct positions by the tubular spacing means placed concentrically on the rod and their attachment to the cylindrical wall.

10.    A column according to claim 9, c h a r a c t e r i z e d in that in the case of column diameters  >1 m each module in addition to the centrally arranged supporting and spacing means has further supporting and spacing means arranged at a plurality of locations between the trays, for securing the position of said trays and increasing their stability.

Fig.1

Fig.2

Fig.3

Fig.4

0158851

*Fig.5*

*Fig.6*

*Fig.8*

*Fig.7*

*Fig.9*